(19) Europäisches Patentamt
European Patent Office
Office européen des brevets

(11) Veröffentlichungsnummer: **0 220 611**
**B1**

(12) # EUROPÄISCHE PATENTSCHRIFT

(45) Veröffentlichungstag der Patentschrift: **10.01.90**

(51) Int. Cl.⁴: **C10L 1/18**, C08F 8/14, F15D 1/00, F17D 1/16

(21) Anmeldenummer: **86114293.3**

(22) Anmeldetag: **16.10.86**

(54) **Verwendung von Estern von alpha-Alken-Acrylsäure-Copolymerisaten bzw. von 1-Alken-Methacrylsäure-Copolymerisaten zur Verbesserung der Fliesseigenschaften von Erdölen.**

(30) Priorität: **24.10.85 DE 3537769**

(43) Veröffentlichungstag der Anmeldung:
**06.05.87 Patentblatt 87/19**

(45) Bekanntmachung des Hinweises auf die Patenterteilung:
**10.01.90 Patentblatt 90/2**

(84) Benannte Vertragsstaaten:
**AT BE DE FR GB IT NL**

(56) Entgegenhaltungen:
**EP-A- 0 074 208**
**EP-A- 0 085 803**
**CH-A- 484 263**
**FR-A- 2 184 522**
**US-A- 4 419 106**

(73) Patentinhaber: **BASF Aktiengesellschaft, Carl-Bosch-Strasse 38, D-6700 Ludwigshafen(DE)**

(72) Erfinder: **Zarate, Jacobo, Dr., Trifelsring 34, D-6703 Limburgerhof(DE)**
Erfinder: **Elfers, Guenther, Am Hang 18, D-6943 Birkenau(DE)**
Erfinder: **Betz, Rainer, Dr., Wallstrasse 34, D-6700 Ludwigshafen(DE)**
Erfinder: **Raubenheimer, Hans-Juergen, Benzstrasse 6, D-6834 Ketsch(DE)**
Erfinder: **Ziegler, Walter, Dr., Starenweg 15, D-6803 Edingen-Neckarhausen(DE)**

**EP 0 220 611 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft die Verwendung von Estern von 1-Alken-Acrylsäure-Copolymerisaten bzw. von 1-Alken-Methacrylsäure-Copolymerisaten zur Verbesserung der Fließeigenschaften von Erdölen.

Je nach ihrer Herkunft können Erdöle beträchtliche Mengen an Wachs enthalten. Dieses Wachs scheidet sich allmählich ab, wenn das Erdöl unterhalb einer bestimmten Temperatur abgekühlt wird. Die abgeschiedenen Wachskristalle bilden räumliche Strukturen, die eine gewisse Zähigkeit des Erdöls bewirken. Bei ausreichend tiefen Temperaturen kann sich das Erdöl sogar völlig verfestigen. Die Anwesenheit von Wachskristallen im Erdöl kann daher dessen Fließeigenschaften und Transportfähigkeit erheblich beeinträchtigen.

Die schlechteren Fließeigenschaften des Erdöls bei tieferen Temperaturen beeinträchtigen insbesondere auch den Transport des Erdöls in Rohrleitungen (Pipelines) beispielsweise durch Pumpen oder Förderung unter Fremd- oder Eigendruck.

Werden wachshaltige Erdöle durch eine Pipeline gepumpt, können sich starke Durchflußhindernisse bilden, die eine starke Pumpkraft erfordern. Dies kann zu hohen Transportkosten führen, insbesondere bei Pipelines, die über lange Strecken führen. Ist der Widerstand zu hoch, so kann es dazu kommen, daß der durch die Pumpe erzeugbare Druck oder der von der Festigkeit der Pipelinerohre abhängige zulässige Höchstdruck nicht mehr zum Pumpen ausreichen.

Wird das Pumpen unterbrochen, während das wachshaltige Erdöl sich in der Pipeline befindet, kühlt sich das Erdöl, das oft wärmer als seine Umgebung ist, ab. Das bei der Abkühlung sich abscheidende Wachs bildet leicht räumliche Strukturen, die sich über den gesamten Querschnitt des Pipelinerohrs erstrecken und nur durch sehr starken Pumpendruck gebrochen werden können. Übersteigt dieser Druck den verfügbaren oder zulässigen Höchstdruck, so kann der Transport nicht wiederaufgenommen werden. Es ist daher von Bedeutung, die Beeinträchtigung der Fließeigenschaften des Erdöls durch Wachs auf ein Minimum zu beschränken.

Um das Fließverhalten eines Erdöls in der Praxis zu bestimmen, werden Messungen derjenigen Eigenschaften vorgenommen, die für das Fließverhalten als kennzeichnend gelten, nämlich Viskosität, Pour Point und Fließ spannung. Die Viskosität steht im besonderen Zusammenhang mit dem Widerstand des Öls während des Pumpens. Der Pour Point bestimmt die zulässige Tiefsttemperatur bei der Lagerung, beim Transport oder bei einer möglichen Unterbrechung des Transports in der Pipeline. Die Fließspannung deutet an, welche Schubspannungen erforderlich sind, wenn ein stehendes Öl wieder in Bewegung gesetzt werden soll. Im allgemeinen gilt die Regel, daß die Handhabung des Erdöls in der Praxis umso leichter ist, je niedriger Pour Point, Fließspannung und Viskosität sind.

Aus der EP-A 0 085 803 ist bereits die Verwendung von Estern von 1-Alken-(Meth)Acrylsäure-Copolymerisaten mit gesättigten Alkoholen mit 1 bis 30 Kohlenstoffatomen zur Verbesserung der Fließeigenschaften von Heizölen bekannt. In der FR-A 2 184 522 ist weiter die Verwendung von Estern von Ethylen-(Meth)Acrylsäure-Copolymerisaten mit gesättigten Alkoholen mit 1 bis 25 Kohlenstoffatomen zur Verbesserung der Fließeigenschaften von Mineralöl beschrieben. Aus der EP-A 0 974 208 ist außerdem die Verwendung von Estern von Ethylen-(Meth)Acrylsäure-Copolymerisaten mit Alkoholen der allgemeinen Formel $HO-C_mH_{2m}-O-C_nH_{2n+1}$, in der m und n je eine Zahl von 1 bis 4 bedeuten, in Mischung mit anderen Copolymeren zur Verbesserung der Fließeigenschaften von Heizölen bekannt. Weiter ist in der CH-A 484 263 die Verwendung von Ethylen-Acrylsäure-ethoxyethylester-Copolymerisaten zur Verbesserung der Fließeigenschaften von Mitteldestillaten im Siedebereich von 150 bis 400°C beschrieben. Aus der US-A 4 419 106 ist schließlich die Verwendung von Estern von 1-Alken-Acrylsäure-Copolymerisaten mit gesättigten Alkoholen mit 8 bis 30 Kohlenstoffatomen zur Verbesserung der Fließeigenschaften von Kohlenwasserstoffölen wie Heizölen bekannt. Die bekannten Verbindungen sind jedoch nicht in jeder Beziehung als Fließverbesserer zufriedenstellend.

Das Ziel der vorliegenden Erfindung bestand somit darin, Verbindungen zur Verbesserung der Fließeigenschaften von Erdölen aufzufinden.

Das Ziel wird durch die Verwendung von Estern von 1-Alken-Acrylsäure-Copolymerisaten bzw. von 1-Alken-Methacrylsäure-Copolymerisaten mit Alkoholen der allgemeinen Formel

$$HO-[\underset{R_2}{\underset{|}{CH}}-\underset{R_3}{\underset{|}{CH}}-O]_x-R_1,$$

in der R1 einen Alkylrest mit 10 bis 24 Kohlenstoffatomen bedeutet, $R_2$ und $R_3$ jeweils einen Wasserstoffrest oder einen Alkylrest mit 1 bis 3 Kohlenstoffatomen bedeuten, wobei $R_2$ und $R_3$ gleich oder verschieden sein können, und X eine Zahl von 2 bis 30 bedeutet, erreicht. Durch Zumischen dieser Verbindungen zum Erdöl wird eine beträchtliche Verringerung von Pour Point, Viskosität und Fließspannung des Erdöls bewirkt, so daß die vorstehend erwähnten Schwierigkeiten bei Produktion, Lagerung und Transport von wachshaltigen Rohölen wirksam beseitigt werden können.

Eine der schwersten Störungen beim Transport von Erdöl durch Pipelines besteht in der Blockierung der Leitung nach Pumpen bei tiefen Temperaturen oder nachdem das Erdöl in der Leitung gestanden hat. Dieses Risiko besteht vor allem beim Pumpen von wachshaltigem Erdöl. Daher müssen bei Erdölen, die durch Pipelines transportiert werden sollen, besonders hohe Anforderungen an die Fließfähigkeit gestellt werden. Man hat daher bisher wachshaltige Erdöle nicht über Pipelines, sondern auf anderem Wege transportiert. Die vorliegende Erfindung ermöglicht vor allem Risiken beim Transport derartiger Erdöle beträchtlich zu vermindern. Durch die Erfindung wird nicht nur ermöglicht, die erforderliche Pumpkraft und die damit verbundenen Kosten zu verringern, sondern auch die Transportkapazität der Leitung bei gleicher Pumpkraft zu erhöhen. Außerdem können wachshaltige Erdöle, die bisher nicht über Pipelines transportiert werden konnten, mittels der Erfindung über Pipelines gefördert werden.

Bisher war es nämlich erforderlich, wachshaltiges Erdöl, damit es sich über Pipelines transportieren läßt, mit einer verhältnismäßig großen Menge eines dünnflüssigen Erdöls mit niedrigem Wachsgehalt zu verdünnen. Im Gegensatz dazu bietet die vorliegende Erfindung den Vorteil, daß das betreffende wachshaltige Erdöl praktisch im ursprünglichen Zustand transportiert werden kann, da nach dem neuen Verfahren nur sehr geringe Mengen an den erfindungsgemäß zu verwendenden Verbindungen zugesetzt werden müssen, um das gewünschte Ziel zu erreichen. Die Verwendung von Trägerölen, die sich später nicht wieder vom ursprünglichen Erdöl abtrennen lassen und es dadurch in unerwünschter Weise verunreinigen, ist somit nicht mehr erforderlich.

Für die Herstellung der erfindungsgemäß zu verwendenden Ester von 1-Alken-Acrylsäure-Copolymerisaten bzw. von 1-Alken-Methacrylsäure-Copolymerisaten kommen 1-Alkene mit im allgemeinen 2 bis 38 Kohlenstoffatomen, vorzugsweise 2 bis 24 Kohlenstoffatomen, insbesondere 2 bis 22 Kohlenstoffatomen in Betracht. Geeignete 1-Alkene sind beispielsweise Ethylen, Propylen, 1-Buten, 1-Penten, 3-Methyl-1-buten, 1-Hepten, 1-Octen. Aus wirtschaftlichen Gründen werden wegen der Verfügbarkeit als wohlfeile Produkte Propylen und insbesondere Ethylen bevorzugt verwendet.

Als Alkohole, die den Estern zugrundeliegen, werden Alkohole der allgemeinen Formel

$$HO-[\underset{R_2}{CH}-\underset{R_3}{CH}-O]_x-R_1,$$

verwendet, in der $R_1$ einen Alkylrest mit 10 bis 24 Kohlenstoffatomen bedeutet, $R_2$ und $R_3$ jeweils einen Wasserstoffrest oder einen Alkylrest mit 1 bis 3 Kohlenstoffatomen bedeuten, wobei $R_2$ und $R_3$ gleich oder verschieden sein können, und X eine Zahl von 2 bis 30, vorzugsweise 3 bis 20 bedeutet.

Die Alkohole der allgemeinen Formel

$$HO-[\underset{R_2}{CH}-\underset{R_3}{CH}-O]_x-R_1$$

werden beispielsweise in sich bekannter Weise erhalten durch Umsetzung von Alkoholen der allgemeinen Formel $R_1-OH_2$ in der $R_1$ die vorstehend genannte Bedeutung hat, mit Alkylenoxiden, vorzugsweise Ethylenoxid, Propylenoxid, Butylenoxid, oder deren Gemischen.

Die Herstellung der erfindungsgemäß zu verwendenden Verbindungen kann z.B. in der Weise erfolgen, daß man das 1-Alken mit einem Acrylsäureester und/oder Methacrylsäureester, denen die vorstehend beschriebenen Alkohole zugrundeliegen, in Gegenwart von radikalbildenden Initiatoren copolymerisiert. Dabei ist es möglich, anstelle eines Acrylsäureesters oder Methacrylsäureesters mit einer einheitlichen Alkoholkomponente ein Estergemisch, dem zwei oder mehrere Alkohole zugrundeliegen, zu verwenden. So kann es beispielsweise vorteilhaft sein, ein Estergemisch aus einem Ester, der sich von einem vorstehend beschriebenen Alkohol der allgemeinen Formel $R_1$-OH ableitet, und einem Ester, der sich von einem Ester, der sich von einem vorstehend beschriebenen Alkohol der allgemeinen Formel

$$HO-[\underset{R_2}{CH}-\underset{R_3}{CH}-O]_x-R_1$$

ableitet, einzusetzen.

Die Polymerisation findet im allgemeinen bei Temperaturen von 150 bis 300°C und Drucken von 1000 bis 3000 bar statt. Das Gewichtsverhältnis von 1-Alken zu ungesättigtem Carbonsäureester liegt zweckmäßig bei 300:1 bis 5:1. Dabei werden zweckmäßig, bezogen auf die Summe der Monomeren, bis zu 5 Gew.-% an Reglern zugesetzt.

Eine weitere bevorzugte Herstellung der erfindungsgemäß zu verwendenden Verbindungen erfolgt beispielsweise in der Weise, daß man das 1-Alken zunächst in an sich bekannter Weise mit Acrylsäure

und/oder Methacrylsäure unter Bildung der 1-Alken/(Meth)Acrylsäure-Copolymerisate polymerisiert. Anschließend wird das erhaltene Copolymerisat mit einem der vorstehend beschriebenen Alkohole oder einem Gemisch davon umgesetzt, wobei unter Veresterung der Carbonsäuregruppen des Copolymerisats die erfindungsgemäß zu verwendenden Ester entstehen.

Die Herstellung der 1-Alken/(Meth)Acrylsäure-Copolymerisate erfolgt zweckmäßig durch kontinuierliche Hochdruckpolymerisation des 1-Alkens mit Acrylsäure und/oder Methacrylsäure in Gegenwart von radikalbildenden Initiatoren. Die Polymerisation erfolgt zweckmäßig bei Temperaturen von 150 bis 300°C und Drucken von 1000 bis 3000 bar. Das Gewichtsverhältnis von 1-Alken zu Acrylsäure und/oder Methacrylsäure liegt im allgemeinen bei 300 : 1 bis 5 : 1, vorzugsweise 200 : 1 bis 10 : 1. Im Ansatz sind, bezogen auf die Summe der Monomeren, bis zu 5 Gew.-% an Reglern anwesend.

Als Regler werden beispielsweise die üblichen Substanzen, wie aliphatische Aldehyde mit 3 bis 6 C-Atomen, insbesondere Propionaldehyd oder n-Butyraldehyd, aliphatische Ketone mit 3 bis 6 C-Atomen, wie Aceton oder Methylethylketon, α-Olefine mit 3 bis 6 C-Atomen, wie Propen, 1-Buten oder 1-Penten, oder $C_3$-$C_5$-Alkane, wie Propan, n-Butan oder n-Pentan, verwendet. Bevorzugt werden aliphatische Aldehyde, wie Propionaldehyd oder n-Butyraldehyd eingesetzt.

Kontinuierlich werden zweckmäßig 3 bis 25 Gew.-% des 1-Alkens umgesetzt und das gebildete Polymerisat kontinuierlich aus der Reaktionszone entfernt. Die Polymerisation findet zweckmäßig in einphasigem Polymerisationsmilieu statt, wobei z.B. bei der Verwendung von Ethylen, das im überkritischen Zustand vorliegenden Ethylen als Lösungsmittel für das Reaktionsgemisch und die Polymerschmelze dient.

Die Polymerisation erfolgt, z.B. bei der Verwendung von Ethylen, in der Regel mit Alkenumsätzen von max. 25 %. Die Dosierung der Acrylsäure und/oder Methacrylsäure und der verwendeten radikalischen Polymerisationsstarter in das Reaktionsgemisch erfolgt zweckmäßig getrennt. Die Dosierung der für die Einstellung des Molekulargewichts erforderlichen Regler kann zusammen mit den Comonomeren bzw. dem radikalischen Starter erfolgen.

Die erhaltenen 1-Alken/(Meth)Acrylsäure-Copolymerisate werden anschließend durch Veresterung in die erfindungsgemäß zu verwendenden Ester übergeführt.

Die Veresterung des Copolymerisats erfolgt zweckmäßig durch Umsetzung des Copolymerisats mit den vorstehend beschriebenen Alkoholen und wird im allgemeinen bei Temperaturen von 50 bis 300°C, vorzugsweise 75 bis 250°C, insbesondere 100 bis 200°C durchgeführt.

Zweckmäßig wird die Veresterung in Gegenwart eines Katalysators, vorzugsweise in Gegenwart eines sauren Katalysators durchgeführt. Geeignete saure Katalysatoren sind beispielsweise Mineralsäuren, wie Schwefelsäure, Phosphorsäure, Sulfonsäuren, wie Alkylbenzolsulfonsäuren, z.B. p-Toluolsulfonsäure, Dodecylbenzolsulfonsäure.

Für die Veresterung wird der Alkohol im allgemeinen in einer, bezogen auf die Carbonsäuregruppen des Copolymerisats, stöchiometrischen Menge eingesetzt. Es ist jedoch auch möglich, den Alkohol im Überschuß, z.B. in einem Überschuß von bis zu 20%, zuzugeben. Man kann die Veresterung durch Zugabe von einem Alkohol oder durch Zugabe einer Mischung von zwei oder mehreren Alkoholen durchführen. Beispielsweise kann es vorteilhaft sein, eine Mischung aus einem vorstehend beschriebenen Alkohol der allgemeinen Formel $R_1$-OH und einem vorstehend beschriebenen Alkohol der allgemeinen Formel

$$HO-[\underset{R_2}{CH}-\underset{R_3}{CH}-O]_x-R_1$$

für die Veresterung einzusetzen.

Im allgemeinen werden diese beiden Alkohole im Gewichtsverhältnis von 20 : 1 bis 1 :20, vorzugsweise, 10 : 1 bis 1 : 10 verwendet.

Die Veresterung wird zweckmäßig in einem Lösungsmittel durchgeführt. Geeignete Lösungsmittel sind beispielsweise aromatische Kohlenwasserstoffe, z.B. Alkylaromaten, wie Toluol, Xylol, Trimethylbenzole, Tetramethylbenzole, Dimethylethylbenzole, Dimethylnaphthalin, Carbonamide wie Dimethylformamid, Diethylformamid, N-Methylpyrrolidon. Es ist auch möglich, den für die Veresterung eingesetzten Alkohol, z.B. den Alkohol der allgemeinen Formel $R_1$-OH, in einem größeren Überschuß zuzusetzen, so daß der im Überschuß zugesetzte Alkohol als Lösungsmittel für die Veresterung dient. Im allgemeinen beträgt das Gewichtsverhältnis von Lösungsmittel zu der Summe des für die Veresterung eingesetzten Copolymerisats und des eingesetzten Alkohols 20 : 1 bis 1 : 20, vorzugsweise 10 : 1 bis 1 : 10, insbesondere 5 : 1 bis 1 : 5.

Man kann den erhaltenen Ester aus dem Lösungsmittel abtrennen und den abgetrennten Ester dem Erdöl zusetzen. Es kann jedoch vorteilhaft sein, den Ester nicht zu isolieren, sondern die bei der Veresterung erhaltene Lösung des Esters in dem Lösungsmittel dem Erdöl zur Verbesserung der Fließeigenschaften zuzugeben.

Im allgemeinen wird der Ester dem Erdöl in solchen Mengen zugegeben, daß der Gehalt des Esters im Erdöl 50 bis 10 000 Gew.-ppm, vorzugsweise 100 bis 5000 Gew.-ppm, insbesondere 100 bis 1000 Gew.-ppm, beträgt.

Die Erfindung wird durch die folgenden Beispiele näher erläutert. Teile sind Gewichtsteile, soweit nicht anders angegeben.

Die Beispiele 1 bis 6 beschreiben die Herstellung von Alken/(Meth)Acrylsäure-Copolymerisaten, die gemäß den Beispielen 7 bis 12 zu den erfindungsgemäß zu verwendenden Estern umgesetzt werden.

Beispiel 1

Eine Mischung von 298 kg/h Ethylen, 11,9 kg/h Acrylsäure und 5,56 kg/h Propionaldehyd wird bei einer Temperatur von 91°C kontinuierlich durch einen auf einem Druck von 2300 bar gehaltenen 10 l-Rührautoklaven geleitet. Durch die kontinuierliche Zugabe von 283,8 g/h t-Butylperpivalat in einem Lösungsmittel wurde die Temperatur im Autoklavenreaktor bei 219°C gehalten. Das nach Entspannung des Reaktionsgemisches in einer Menge von 42 kg/h anfallende Polymerisat entsprach einem Umsatz von 14,1 %, bezogen auf den Ethylendurchsatz. Es enthielt 22,7 Gew.-% Acrylsäure und hat einen Schmelzindex MFI 125/325 von 500 bzw. eine Schmelzviskosität bei 120°C von 2600 $mm^2/s$.

Die Beispiele 2 bis 6 wurden gemäß Beispiel 1 durchgeführt, die abweichenden Parameter können der Tabelle 1 entnommen werden, in der auch die Parameter des vorstehenden Beispiels 1 angegeben sind.

Tabelle 1

| Beispiel Nr. | Druck (bar) | T max. (°C) | T Gemisch (°C) | Ethylen-Durchsatz (kg/h) | AS-Dosierung (kg/h) | TBPPI-Dosierung (g/h) | PA-Dosierung (kg/h) | Ausstoß (kg/h) | Ethylen-Umsatz (%) | AS-Gehalt (Gew.-%) | Schmelzindex MFI 125/325 (g/10 min) | Schmelzviskosität (120°C) ($mm^2/s$) |
|---|---|---|---|---|---|---|---|---|---|---|---|---|
| 1 | 2300 | 219 | 91 | 298 | 11,9 | 283,8 | 5,56 | 42 | 14,1 | 22,7 | 500 | 2600 |
| 2 | 2300 | 220 | 96 | 284 | 10,3 | 182,1 | 0,58 | 38 | 13,4 | 21,2 | 3 | |
| 3 | 2300 | 220 | 91 | 314 | 11,3 | 155,0 | 1,46 | 43 | 13,7 | 20,0 | 16 | |
| 4 | 2300 | 119 | 92 | 293 | 10,3 | 197,6 | 1,62 | 39 | 13,3 | 19,0 | 40 | |
| 5 | 2300 | 218 | 90 | 295 | 11,1 | 209,2 | 3,47 | 41 | 13,9 | 21,8 | 92 | |
| 6 | 2300 | 219 | 92 | 285 | 11,1 | 210,4 | 4,50 | 39 | 13,7 | 21,1 | 190 | 12 000 |

Es bedeuten:

AS = Acrylsäure
TBPPI = t-Butylperpivalat
PA = Propionaldehyd
T = Temperatur

Beispiel 7

In einem Reaktionsgefäß, das mit einem Rührer, Thermometer und einem Wasserabscheider mit Kühler versehen war, wurden 42,7 g (O,125 Val Säure) eines Copolymerisates von Ethylen und Acrylsäure (Acrylsäure: 21,1 %, Schmelzindex: 16O/325 : 1O,5) in 125 g Xylol vorgelegt. Nach der Zugabe von 81,5 g (O,125 Mol) eines Umsetzungsproduktes aus einem Mol eines $C_{16}/C_{18}$-Fettalkoholgemisches und 9 Mol Ethylenoxid sowie 1,6 g Dodecylbenzolsulfonsäure als Katalysator wurde diese Mischung 16 h unter Rückfluß erhitzt, wobei ca. 2 bis 3 ml Wasser abgeschieden wurde. Anschließend wurde das homogene Reaktionsprodukt bei 5O°C aus dem Reaktionsgefäß abgezogen. Die 51 %ige Lösung in Xylol hatte eine Säurezahl von 14,O mg KOH/g und war bei 35°C fließfähig.

Beispiel 8

Die in Beispiel 7 ausgeführte Reaktion wurde mit der Änderung wiederholt, daß man anstelle von Xylol als Lösungsmittel eine im wesentlichen Dimethylethylbenzol und Tetramethylbenzole enthaltende Mischung von Alkylbenzolen (Siedebereich 19O bis 21O°C) verwendete und die Reaktion bei 145°C durchführte. Die 49,4 %ige Lösung in dem Lösungsmittel hatte eine Säurezahl von 1O,3 mg KOH/g und war bei 35°C fließfähig.

Beispiel 9

In der in Beispiel 7 beschriebenen Apparatur wurden 42,7 g (O,125 Val Säure) eines Copolymerisates von Ethylen und Acrylsäure (Acrylsäure: 21,1 %, Schmelzindex: 16O/325 : 1O,5) in 168 g Xylol gelöst. Die Veresterung wurde mit 123,3 g (O,125 Mol) eines Umsetzungsproduktes aus einem Mol eines $C_{16}/C_{18}$-Fettalkoholgemisches mit 4,6 Mol Ethylenoxid und 9,1 Mol Propylenoxid sowie 2,4 g Dodecylbenzolsulfonsäure als Katalysator durchgeführt. Nach 16 h unter Rückflußtemperatur, wobei 2 bis 3 ml Wasser abgeschieden wurden, wurde das Reaktionsgemisch auf 5O°C abgekühlt und aus dem Reaktionsgefäß abgezogen. Die 48,1 %ige Lösung in Xylol hatte eine Säurezahl von 14,1 mg KOH/g und war bei 35°C fließfähig.

Beispiel 1O

Die in Beispiel 9 ausgeführte Reaktion wurde mit der Änderung wiederholt, daß man anstelle von Xylol als Lösungsmittel eine im wesentlichen Dimethylethylbenzol und Tetramethylbenzole enthaltende Mischung (Siedebereich 19O bis 21O°C) verwendete und die Reaktion bei 145°C durchführte. Die 49,1 %ige Lösung in dem Lösungsmittel hatte eine Säurezahl von 15,O mg KOH/g und war bei 35°C fließfähig.

Beispiel 11

In der in Beispiel 7 beschriebenen Apparatur wurden 42,7 g (O,125 Val Säure) eines Copolymerisates von Ethylen und Acrylsäure (Acrylsäure: 21,1 %, Schmelzindex: 16O/325 : 1O,5) in 116,9 Xylol gelöst. Nach der Zugabe von 65,1 g (O,1O Mol) eines Umsetzungsproduktes aus einem Mol eines $C_{16}/C_{18}$-Fettalkoholgemisches und 9 Mol Ethylenoxid und 7,5 g (O,O25 Mol) eines $C_{18}/C_{22}$-Fettalkohols sowie 1,5 g Dodecylbenzolsulfonsäure als Katalysator wurde die Mischung 16 h unter Rückfluß erhitzt, wobei ca. 2 bis 3 ml Wasser abgeschieden wurden. Anschließend wurde das homogene Reaktionsprodukt bei 5O°C aus dem Reaktionsgefäß abgezogen. Die 51,8 %ige Lösung hatte eine Säurezahl von 11,2 mg KOH/g und war bei 35°C fließfähig.

Beispiel 12

In der in Beispiel 7 beschriebenen Apparatur wurden 4O,9 g (O,125 Val Säure) eines Copolymerisates von Ethylen und Acrylsäure (Acrylsäure: 22,O %, Schmelzindex: 19O/216 : 14O) in 85,O g Xylol gelöst. Die Veresterung wurde mit 43,3 g (O,125 Mol) eines Umsetzungsproduktes aus einem Mol eines $C_{13}/C_{15}$-Oxalkohols und 3 Mol Ethylenoxid sowie O,8 g Dodecylbenzolsulfonsäure als Katalysator durchgeführt. Nach 16 h unter Rückflußtemperatur, wobei 2 bis 3 ml Wasser abgeschieden wurden, wurde das Reaktionsgemisch auf 5O°C abgekühlt und mit 53,1 g Xylol verdünnt. Die 38,2 %ige Lösung hatte eine Säurezahl von 8,8 mg KOH/g und war bei 35°C fließfähig.

Beispiel 13

Rohöl (Beatrice) der Provenienz Nordsee wurde jeweils mit wechselnden Mengen der gemäß den Beispielen 7 bis 12 hergestellten Produkte versetzt. Die Zugabe erfolgte durch Einrühren des Produktes

bei 5O°C innerhalb 3O Minuten. Dabei wurde der Pour Point nach ASTM D 97-66 gemessen. Der Pour Point des Rohöls ohne Copolymerisatzugabe betrug 29°C.

| Gehalt an zugegebenem Produkt | Pour Point bei Zugabe der Produkte aus den Beispielen 7 bis 12 | | | | | |
|---|---|---|---|---|---|---|
| | Beisp. 7 | Beisp. 8 | Beisp. 9 | Beisp. 10 | Beisp. 11 | Beisp. 12 |
| 0 ppm (Blindwert) | 29°C | 29°C | 29°C | 29°C | 29°C | 29°C |
| 300 ppm | 23°C | 20°C | 23°C | 23°C | 23°C | 24°C |
| 400 ppm | 21°C | 19°C | 21°C | 21°C | 22°C | 23°C |
| 500 ppm | 21°C | 17°C | 21°C | 21°C | 19°C | 22°C |

Beispiel 14

Rohöl CANO GARZA NORTE der Provenienz Columbien wurde jeweils mit wechselnden Mengen der gemäß den Beispielen 7 und 8 hergestellten Produkte versetzt. Die Zugabe erfolgte durch Einrühren des Produktes bei 5O°C innerhalb 3O Minuten. Der Pour Point wurde nach ASTM D 97-66 gemessen.

| Gehalt an zugesetztem Produkt im Rohöl | Pour Point des Rohöls bei Zugabe der Produkte aus den Beispielen 7 und 8 | |
|---|---|---|
| | Beispiel 7 | Beispiel 8 |
| 0 ppm (Blindwert) | 23°C | 23°C |
| 300 ppm | 0°C | –1°C |
| 400 ppm | 0°C | –2°C |
| 500 ppm | 0°C | –2°C |

Beispiel 15

Rohöl (Beatrice) der Provenienz Nordsee wurde jeweils mit 5OO ppm der gemäß Beispielen 7, 9 und 12 hergestellten Produkte versetzt. Die Zugabe erfolgte durch Einrühren des Produktes bei 5O°C innerhalb 3O Minuten. Dabei wurde die scheinbare bzw. plastische Viskosität und die Fließgrenze bei Raumtemperatur im Fann-Viskosimeter Moden 35 SA gemessen. Der Pour Point wurde nach ASTM D 97-66 bestimmt.

| Gehalt an zugegebenem Produkt im Rohöl | Pour Point (°C) | scheinbare plastische Viskosität (mPa x sek) | | Fließgrenze (Pa) |
|---|---|---|---|---|
| 0 ppm (Blindwert) | 29 | 22 | 18 | 3,84 |
| 500 ppm Produkt aus Beispiel 7 | 21 | 15 | 14 | 0,48 |
| 500 ppm Produkt aus Beispiel 9 | 21 | 18 | 16 | 1,44 |
| 500 ppm Produkt aus Beispiel 12 | 22 | 15 | 14 | 0,96 |

Beispiel 16

In einem Mini-Pipeline-System wurde die Prüfung der Wirksamkeit der gemäß den Beispielen 7, 9 und 12 hergestellten Produkte zur Verbesserung der Förderfähigkeit eines Rohöl (Beatrice) der Provenienz Nordsee durchgeführt. Die Gesamtanlage bestand hauptsächlich aus zwei Funktionsmodulen:

a) Temperierbehälter 1 mit Rührwerk und Temperierbehälter 2 zur dynamischen Temperierung und mechanischen Belastung.
b) Temperierbehälter 3 mit einer Modell-Pipeline.

Nach einer definierten, thermischen und mechanischen Behandlung im dynamischen Temperierteil wurde die zu untersuchende Rohölprobe mit Stickstoff in die Modell-Pipeline gepresst. Danach begann eine

statische, definierte langsame Abkühlung der Rohölprobe über einer längeren Zeitraum hinweg.

Als eigentliche Testgröße wurden der Stickstoffdruck bzw. die Schubspannung ermittelt, die zur Wiederinbetriebnahme erforderlich waren.

Rohöl "Beatrice" der Provenienz Nordsee wurde jeweils mit einer solchen Menge der gemäß den Beispielen 7, 9 und 12 hergestellten Produkte versetzt, daß der Produktgehalt im Rohöl 5OO ppm betrug. Die Zugabe erfolgte durch Einrühren des Polymerisates im geschlossenen Temperierbehälter 1 mit Rührwerk, wobei die Temperatur bis auf 8O°C anstieg.

Nach folgendem dynamischen Abkühlprogramm im Temperierteil

| Temperatur °C | Zeitdauer des Versuchs bei Erreichen der jeweiligen Temperatur |
|---|---|
| 80 | 0 h |
| 65 | 1 h |
| 50 | 3 h 8 Min. |
| 35 | 4 h 33 Min. |
| 30 | 2 h 47 Min. |
| 20 | 5 h 33 Min. |

wurden die zu untersuchende Rohölprobe bei 2O°C mit Stickstoff in die Modell-Pipeline gepresst und folgende statische Abkühlprogramme durchgeführt:

| Temperatur °C | Zeitdauer des Versuchs bei Erreichen der jeweiligen Temperatur |
|---|---|
| 16 | 8 h 53 Min. |
| 14 | 5 h 43 Min. |
| 11 | 10 h |
| 9 | 10 h |
| 6,2 | 35 h |

Gesamtzeit = 3 Tage 14 h 37 Min.

Bei einer Temperatur von 6,2°C wurde die zu untersuchende Rohölprobe mit Stickstoff aus der Modell-Pipeline gepresst und der zur Wiederinbetriebnahme benötigte Stickstoffdruck ermittelt.

| Gehalt an zugegebenem Produkt im Rohöl | Stickstoff-Druck bei Wiederinbetriebnahme der Modell-Pipeline (bar) | Schubspannung ($N/m^2$) | Fließgeschwindigkeit des Rohöls (ml/15′) |
|---|---|---|---|
| 0 ppm (Blindwert) | 4 | 37,00 | 0,1 |
| 500 ppm Produkt aus Beispiel 7 | 0,5 | 4,69 | 0,05 |
| 500 ppm Produkt aus Beispiel 9 | 1,4 | 13,13 | 0,05 |
| 500 ppm Produkt aus Beispiel 12 | 1,4 | 13,13 | 0,05 |

**Patentansprüche**

1. Verwendung von Estern von 1-Alken-Acrylsäure-Copolymerisaten bzw. 1-Alken-Methacrylsäure-Copolymerisaten mit Alkoholen der allgemeinen Formel

$$HO-[\underset{R_2}{CH}-\underset{R_3}{CH}-O]_x-R_1,$$

in der $R_1$ einen Alkylrest mit 10 bis 24 Kohlenstoffatomen bedeutet, $R_2$ und $R_3$ jeweils einen Wasserstoffrest oder einen Alkylrest mit 1 bis 3 Kohlenstoffatomen bedeuten, wobei $R_2$ und $R_3$ gleich oder verschieden sein können, und X eine Zahl von 2 bis 30 bedeutet, zur Verbesserung der Fließeigenschaften von Erdölen.

2. Verfahren zur Herstellung von Estern von 1-Alken-Acrylsäure-Copolymerisaten bzw. 1-Alken-Methacrylsäure-Copolymerisaten, dadurch gekennzeichnet, daß man 1-Alken-Acrylsäure-Copolymerisate bzw. 1-Alken-Methacrylsäure-Copolymerisate mit Alkoholen der allgemeinen Formel

$$HO-[\underset{R_2}{CH}-\underset{R_3}{CH}-O]_x-R_1,$$

in der $R_1$ einen Alkylrest mit 10 bis 24 Kohlenstoffatomen bedeutet, $R_2$ und $R_3$ jeweils einen Wasserstoffrest oder einen Alkylrest mit 1 bis 3 Kohlenstoffatomen bedeuten, wobei $R_2$ und $R_3$ gleich oder verschieden sein können, und X eine Zahl von 2 bis 30 bedeutet, umsetzt.

3. Ester von 1-Alken-Acrylsäure-Copolymerisaten bzw. 1-Alken-Methacrylsäure-Copolymerisaten, erhältlich durch Umsetzung von 1-Alken-Acrylsäure-Copolymerisaten bzw. 1-Alken-Acrylsäure-Copolymerisaten bzw. mit Alkoholen der allgemeinen Formel

$$HO-[\underset{R_2}{CH}-\underset{R_3}{CH}-O]_x-R_1,$$

in der $R_1$ einen Alkylrest mit 10 bis 24 Kohlenstoffatomen bedeutet, $R_2$ und $R_3$ jeweils einen Wasserstoffrest oder einen Alkylrest mit 1 bis 3 Kohlenstoffatomen bedeuten, wobei $R_2$ und $R_3$ gleich oder verschieden sein können, und X eine Zahl von 2 bis 30 bedeutet.

## Claims

1. A method of using an ester of a 1-alkene/acrylic or methacrylic acid copolymer with an alcohol of the general formula

$$HO-[\underset{R_2}{CH}-\underset{R_3}{CH}-O]_x-R_1,$$

where $R_1$ is an alkyl of 10 to 24 carbon atoms, $R_2$ and $R_3$, which may be identical or different, are each hydrogen or an alkyl of from 1 to 3 carbon atoms, and x is from 2 to 30, for improving the flow properties of crude oil.

2. A process for preparing an ester of a 1-alkene/acrylic or methacrylic acid copolymer, which comprises reacting a 1-alkene/acrylic or methacrylic acid copolymer with an alcohol of the general formula

$$HO-[\underset{R_2}{CH}-\underset{R_3}{CH}-O]_x-R_1,$$

where $R_1$ is an alkyl of 10 to 24 carbon atoms, $R_2$ and $R_3$, which may be identical or different, are each hydrogen or an alkyl of from 1 to 3 carbon atoms, and x is from 2 to 30.

3. An ester of a 1-alkene/acrylic or methacrylic acid copolymer, obtainable by reacting a 1-alkene/acrylic or methacrylic acid copolymer with an alcohol of the general formula

$$HO-[\underset{R_2}{CH}-\underset{R_3}{CH}-O]_x-R_1,$$

where $R_1$ is an alkyl of 10 to 24 carbon atoms, $R_2$ and $R_3$, which may be identical or different, are each hydrogen or an alkyl of from 1 to 3 carbon atoms, and x is from 2 to 30.

## Revendications

1. Utilisation d'esters de copolymères 1-alcène/acide acrylique ou 1-alcène/acide méthacrylique et d'alcools de formule générale

$$HO-[\underset{R_2}{CH}-\underset{R_3}{CH}-O]_x-R_1,$$

dans laquelle $R_1$ représente un reste alkyle de 10 à 24 atomes de carbone, $R_2$ et $R_3$ représentent chacun un atome d'hydrogène ou un reste alkyle de 1 à 3 atomes de carbone, $R_2$ et $R_3$ pouvant être identiques ou différents, et X représente un nombre de 2 à 30, pour l'amélioration des propriétés d'écoulement des pétroles bruts.

2. Procédé de préparation d'esters de copolymères 1-alcène/acide acrylique ou 1-alcène/acide méthacrylique, caractérisé en ce qu'on fait réagir des copolymères 1-alcène/acide acrylique ou 1-alcène/acide méthacrylique avec des alcools de formule générale

$$HO-[\underset{R_2}{CH}-\underset{R_3}{CH}-O]_x-R_1,$$

dans laquelle $R_1$ représente un reste alkyle de 10 à 24 atomes de carbone, $R_2$ et $R_3$ représentent chacun un atome d'hydrogène ou un reste alkyle de 1 à 3 atomes de carbone, $R_2$ et $R_3$ pouvant être identiques ou différents, et X représente un nombre de 2 à 30.

3. Esters de copolymères 1-alcène/acide acrylique ou 1-alcène/acide méthacrylique, préparés par réaction de copolymères 1-alcène/acide acrylique ou 1-alcène/acide méthacrylique avec des alcools de formule générale

$$HO-[\underset{R_2}{CH}-\underset{R_3}{CH}-O]_x-R_1,$$

dans laquelle $R_1$ représente un reste alkyle de 10 à 24 atomes de carbone, $R_2$ et $R_3$ représentent chacun un atome d'hydrogène ou un reste alkyle de 1 à 3 atomes de carbone, $R_2$ et $R_3$ pouvant être identiques ou différents, et X représente un nombre de 2 à 30.